# EUROPEAN PATENT SPECIFICATION

(11) **EP 4 504 646 B1**
(45) Date of publication and mention of the grant of the patent: **27.05.2026**
(21) Application number: 23717518.7
(22) Date of filing: 05.04.2023
(51) Int. Cl.: B68C 1/14

(54) **GIRTHS**
GURTE
SANGLES

(30) Priority: 05.04.2022 GB 202205010
(43) Date of publication of application: 12.02.2025
(73) Proprietor: Kempsell, David, Canterbury, Kent CT4 6JS (GB); White, Margaret, Canterbury, Kent CT4 6JS (GB)
(72) Inventor: Kempsell, David, Canterbury, Kent CT4 6JS (GB); White, Margaret, Canterbury, Kent CT4 6JS (GB)
(74) Representative: Bryers Intellectual Property Ltd
(86) International application number: PCT/EP2023/059069
(87) International publication number: WO 2023/194509

(56) References cited:
- EP-A1- 2 982 642
- FR-A- 471 106
- GB-A- 2 585 091

## Description

The present invention relates to girths. More particularly, the present invention relates to improvements in the area of the girth around the sternum of a horse and the mobility of muscles of the horse under a girth adjacent to the sternum.

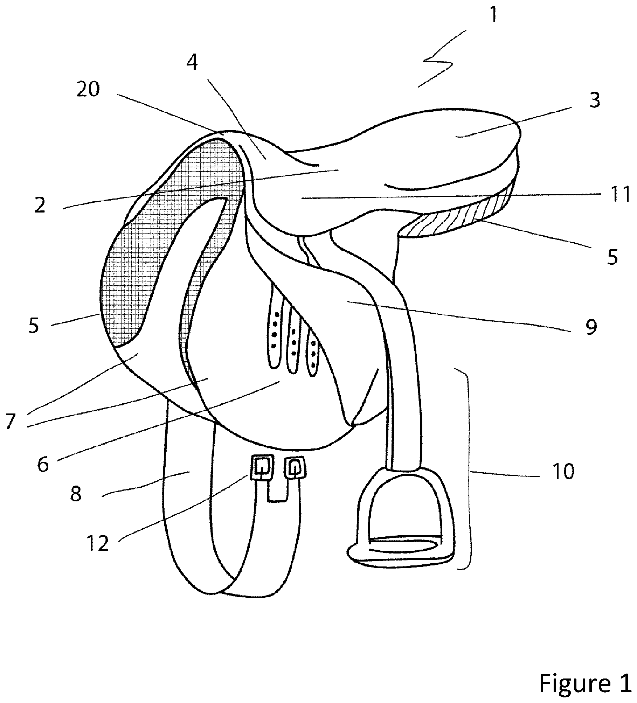

A typical girth 8 for a horse is shown in Figure 1. The girth passes under the horse's rib cage behind the elbows of horse in the area called "the girth groove". The girth groove is the place the horse will carry the girth, and this will not be the same on every horse. It will alter with conformation and fitness of the horse. The girth's purpose is to secure and hold a Saddle 1 in place. To do this it must pass around the lower half of the rib cage laying across the sternum of the horse's rib cage like a belt. The girth 8 is attached to the saddle 1 by means of straps on the saddle called girth billets 6 normally 1" (25mm) in width and 3/16" (4 -5mm) thick to buckles 12 on the girth 8. The girth billets 6 have holes for the buckles 12 nominally 1 ¼" (30mm) apart to facilitate the girth fitting differing circumferences of horse's rib cage.

Typically, girths are made of leather or synthetic materials that share the characteristic of being able to mould themselves around the horse's rib cage as the girth is tightened using the girth billets 6 and buckles 12.

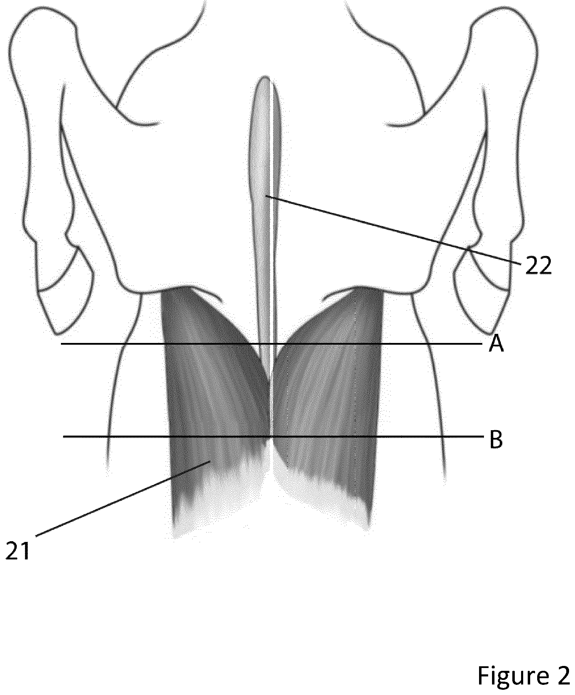

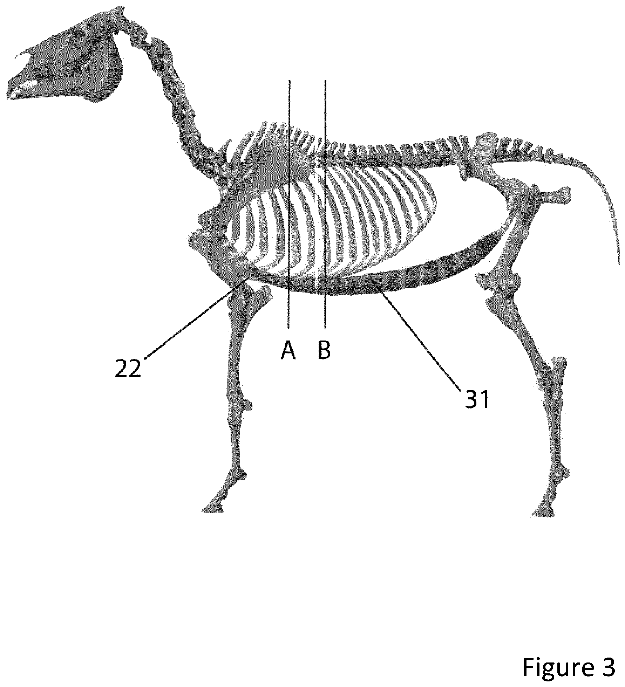

It is commonly accepted that girths touch, and therefore apply pressure to, the horse for the entirety of the girth's length. With reference to Figure 2 showing the view of the underside of a horse and Figure 3 the side view of a skeleton of a horse, this band of pressure will lay across the muscles adjacent to the sternum 22 of the horse, between lines A & B as drawn, in particular, across the ascending pectoral 21 muscle and the rectus abdominus 31 muscle which lies under this ascending pectoral 21.

The ascending pectoral 21 is responsible for suspension of the trunk (rig cage) between the thoracic limbs, forelimb retraction and stabilisation of the glenohumeral joint; and reinforces the action of the latissimus dorsi which retracts the forelimb.

The rectus abdominus 31 muscle connects the thorax to the pelvis and is responsible for support of the abdominal viscera, aids in defecation and parturition, aids in expiration and, most importantly for the ridden horse, flexes or lifts the back.

Therefore, a girth that applies pressure to these muscle groups will impede the function of the muscles and therefore the functional mobility of the horse. Pressure applied to the muscles will depend on the tightness of the girth but the looser the girth the less stable the saddle and thus the rider will be which ultimately ends up that the girth is tightened to a point at which the rider feels stable/safe. Pressure on the musculature impedes the ability of the horse to move to its best potential.

Some manufacturers produce girths with a short piece of elastic between the Buckle 12 and the main body or Strap 8 of the girth. This is meant to afford some comfort to the horse but in practice has been shown to exacerbate movement in the saddle which in turn rubs the horse. In short, this practice has not found favour with a lot of saddle fitters.

FR 471106 A describes a girth intended to prevent the girth straps from slipping when worn by a horse having a very forward girth groove. The girth comprises a piece of leather or wood mounted to straps such that tightening the strap causes the piece of leather or strap to penetrate that part of the horse's body between the pectoral muscles, thereby fixing the device in place and preventing forward or backward sliding of the strap.

The present invention aims to overcome these problems.

In its broadest sense, the present invention provides a girth as defined in claim 1. Dependent claims 2-15 define particular embodiments of the girth according to the claimed invention.

The girth has a sternum plate which will bridge the girth straps so they do not touch the pectoral muscle groups of the horse by use of a resilient material in the area of the sternum. The sternum plate also provides a means for the horse to expand and contract its rib cage without the use of elastic materials in the straps of the girth.

Preferably, the girth plate does not deflect, flex or deform when a force of about 20Nm is applied to the girth straps perpendicular to a surface of the girth plate.

Preferably, the girth plate is formed of a carbon fibre reinforced polypropylene.

Preferably, the girth plate is shield like shape to follow the shape of the animal's rib cage as the circumference enlarges moving backwards from line A to line B (Figure 2 & 3).

More specifically, the present invention, as defined in claim 1, provides a girth comprising girth straps and a sternum plate spacing and bridging the girth straps such that, in use on a horse, they do not touch the pectoral muscle groups of the horse, wherein the sternum plate comprises a resilient material in the area of the sternum.

In certain embodiments, the sternum plate comprises a resilient plate and a sternum pad, wherein the sternum pad is proximal to the horse, in use.

Suitably, the resilient plate is formed of a carbon fibre reinforced polypropylene.

Advantageously, the resilient plate is formed of polypropylene having a thickness of from 4mm to 6mm or about 5mm.

In some examples, the resilient plate includes stiffening ribs, optionally lateral stiffening ribs. Preferably, the sternum plate further comprises a proximal layer of foam padding, optionally a layer of foam padding having a thickness of from 5mm to 18mm, 8mm to 14mm, 9mm to 12mm or about 10mm and optionally formed of a closed-cell foam.

In certain examples, the sternum plate includes an upper cover and a lower cover, optionally wherein the upper and/or lower covers are formed of leather or a similarly-performing material.

Optionally, at least one of the upper and/or lower covers includes perforations to permit air flow between the inside and outside of the sternum plate.

In certain embodiments, an upper surface of the sternum plate includes guides or keepers to position the girth straps to prevent longitudinal movement with respect to the sternum plate.

Optionally, the sternum pad is formed of a foamed polymeric material, optionally a closed-cell foam. Optionally, the foam has a thickness of from 15mm to 40mm, 20mm to 30mm, or about 25mm.

In some examples, the sternum pad further comprises an upper cover and a lower cover, optionally wherein the upper and/or lower covers are formed of leather or a similarly-performing material.

Optionally, at least one of the upper and/or lower covers includes perforations to permit air flow between the inside and outside of the sternum pad.

In embodiments including foam, advantageously the foam has a net density of 80-150 kg/m³, or 100-120 kg/m³ and/or the foam has a compression resistance of 9 to 25 kPa, 11 to 24 kPa

Advantageously, the sternum plate is shaped to follow the shape of the horse's rib cage as the circumference enlarges moving backwards from line A to line B as shown in Figures 2 and 3.

By the term "substantially prevented by the sternum plate from contacting the horse in the region of the ascending pectoral and rectus abdominus muscles of the horse", it is intended that, in preferred embodiments, the girth straps make no contact with the horse overlying the location of the ascending pectoral and rectus abdominus muscles. In alternative embodiments, the sternum plate may contact the horse in the region of the ascending pectoral and rectus abdominus muscles by an amount sufficiently small as to not impede contraction of the muscles to an extent which impedes movement of the horse. In such embodiments, preferably the sternum plate contacts no more than 20% of the skin of the horse in the area of the muscles, no more than 15%, no more than 10% or no more than 5% of the muscle area. In preferred examples of these embodiments, the sternum plate may contact the skin of the horse only in peripheral areas of the ascending pectoral and rectus abdominus muscles.

The above and other aspects of the present invention will now be described in further detail, by way of example only, with reference to the accompanying figures, in which:
Figure 1 is an explanatory view of a horse with saddle and girth;
Figure 2 is the view of the underside of a horse's rib cage;
Figure 3 is view of a horse's skeleton from the side;

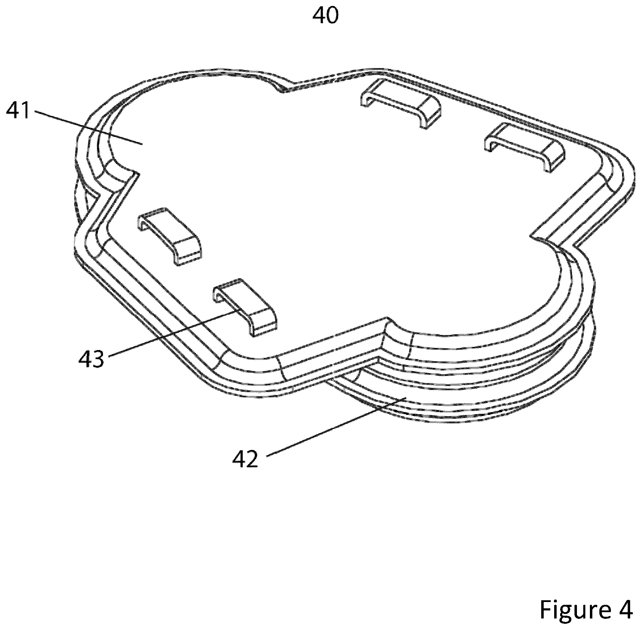

Figure 4 is view of an embodiment of girth of the present invention with girth straps omitted;
Figure 5 is a perspective view of the embodiment of Figure 4 in a disassembled or exploded configuration;
Figure 6 is a cross sectional view of the embodiment of Figure 4 secured to a horse;

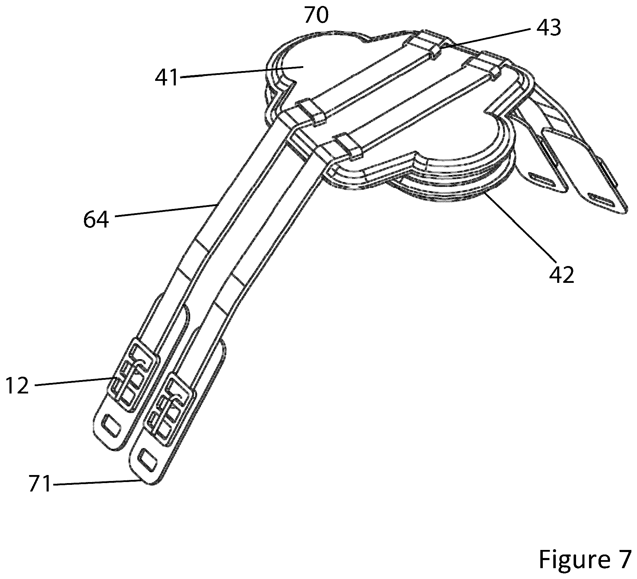

Figure 7 is a view of the embodiment of Figure 4 in its entirety orientated as viewed from under the horse looking up; and

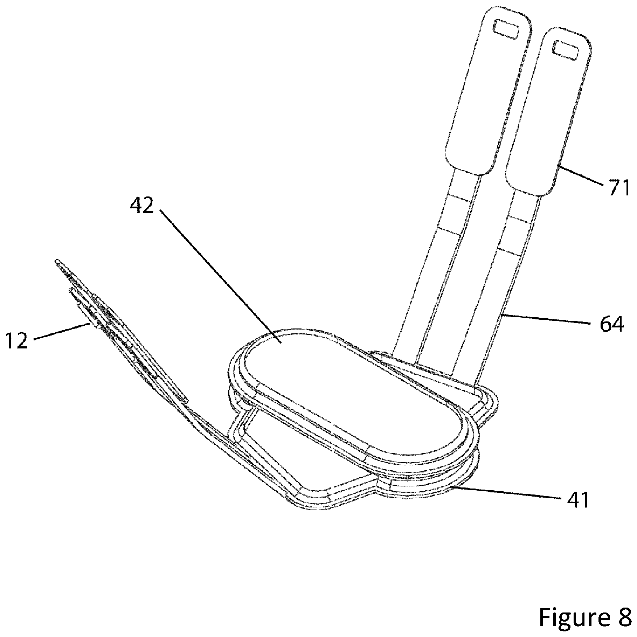

Figure 8 is a view of the embodiment of Figure 4 orientated as if it were on a horse with the back edge of the sternum plate nearest the viewer.

Accordingly, with reference to the accompanying figures, a preferred embodiment of a girth in accordance with the present invention includes a sternum plate which is made of two parts, a girth plate 41, typically including a resilient or reinforced plate, and a sternum pad 42.

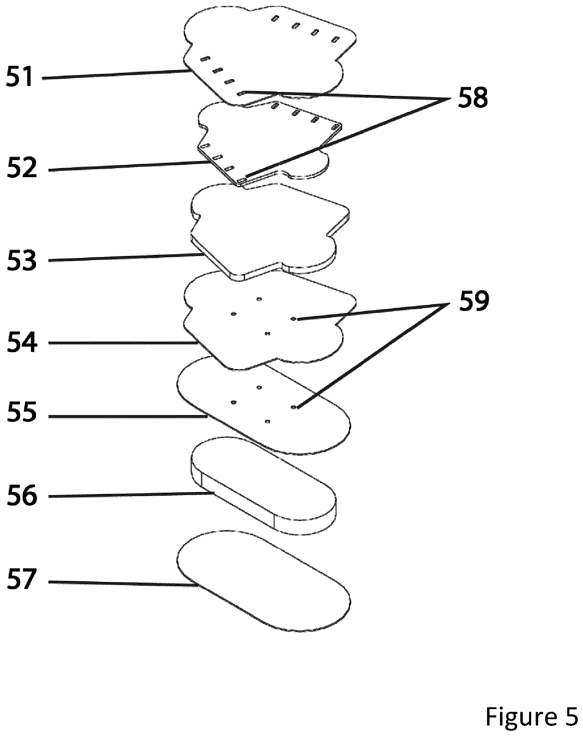

The girth plate 41 includes a resilient or reinforced polymer plate 52 (Figure 5) which will not flex under the pressures exerted by the girth straps when tightened on the horse. In preferred embodiments, the resilient or reinforced plate 52 is a plate which does not deflect or deform when a force of 20Nm is applied to all the girth straps simultaneously perpendicular to the surface of the resilient or reinforced plate 52.

We have determined that polypropylene sheet having a thickness of about 5mm and provided with welded ribs has a stiffness that is sufficient to withstand deformation or flexing by forces experienced in use of the saddle. Materials such as carbon fibre reinforced plastics sheet materials also provide lightweight solutions but are expensive when compared to polypropylene.

Resilient plate 41 may include an outer cover 51,54 of leather or a similarly performing material encasing the polymer plate 52 and a 10mm foam padding layer 53. The foam padding layer 53 is positioned on the horse's side (proximal side) of the resilient plate 52, and is provided in the event of accidental collision between the plate and the animal in use and to provide additional shock absorption when directly under sternum pad 42.

The top cover 51 has slots 58 for keepers 43 to thread through. The keepers 43 position the girth straps 72 and ensure they do not move in relation to the plate in a longitudinal plan but do allow the straps 71 to move laterally to enable the rider to ensure the sternum pad 42 is always centrally located on the sternum of the horse before mounting.

In preferred embodiments, the sternum pad 42 is a foam pad 56 of approximately 25mm thickness encased in leather or leather like material 57,55. The upper part of the cover has four apertures or holes 59 to facilitate air flow to allow the foam to deform and recover as quickly as the horse can move its musculature. Without these holes the cover could act like a sealed air cell and not be shock absorbing or easily deformable. Conveniently, these holes also act as a lining up reference points in the construction of the sternum plate 40 and the resilient plate 41 is attached to sternum pad 42 by a box of stitching those corners are the four hole 59.

The foam that is used to pad the girth has sufficient qualities to provide for shock absorption when in use. We have determined that a foam with a net density of 100 - 120kg/m³ and a compression resistance of 13 -21 kPa provides excellent results. This specification of foam provides for a cushioning spring like reaction between the horse and the polymer plate 52. In total a spacing of 25mm (56) + 10mm (53) = 35mm is provided between polymer plate 52 and the horse's rib cage 62.

The sternum plate sits directly on to the skin of the horse 63 and the majority of the force the girth exerts is transferred to the horse's sternum 22. There may be a small overlap onto rectus abdominus 31 and the ascending pectoral 21 muscles, but the majority of these muscle groups are sitting in free space 61 and can work at liberty.

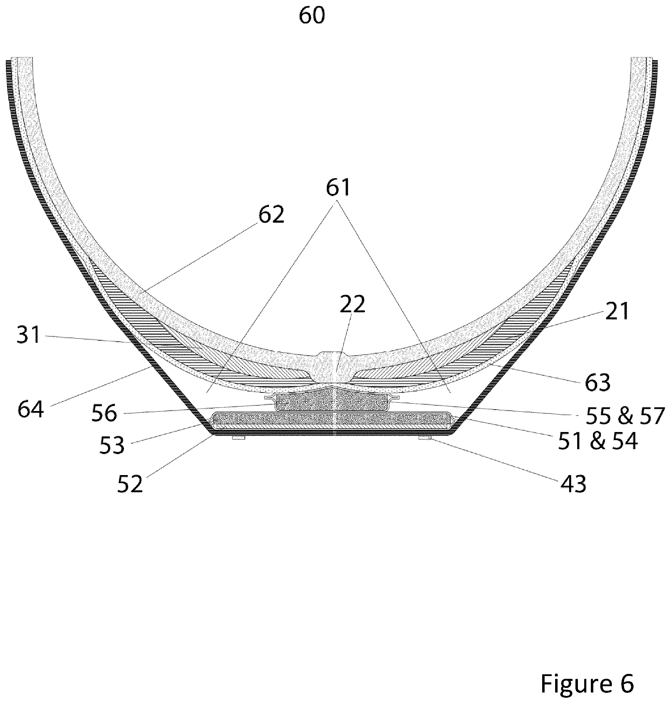

With reference to Figure 6, the angle of the girth straps 64 that is produced when coming off the side of resilient plate52 (51-54) means that the pressures that are exerted on the sides of the horse's rib cage 62 are minimised because the force is applied to the horse's sides at such an oblique angle.

The girth tightness is kept more constant and even by the foam 53,56 deforming and expanding as the rib cage/musculature expands and contracts when the horse is in movement. This facilitates the ability for the horse to use the pectoral muscles to maximum effect and increases stride length and the ability of the horse to "engage". Engagement is when a horse steps under the body more with the hind legs and lifting its' back by recruiting rectus abdominus 31 and retract it fore limbs to a great extent recruiting ascending pectoral 21.

Girths of the present invention provide a more comfortable fit for the horse, leading to increases in the horse's rideability and a general willingness of the horse to perform the task that the rider asks of the horse.

## Claims

1. A girth for a horse, the girth comprising girth straps (64) and a sternum plate (40) spacing and bridging the girth straps (64) such that, in use on a horse, the girth straps are substantially prevented by the sternum plate from contacting the horse in the region of the ascending pectoral (21) and rectus abdominus (31) muscles of the horse, wherein the sternum plate (40) comprises a girth plate (41) formed of a material which will not substantially flex or deform under pressures exerted by the girth straps when tightened, in use, on a horse; **characterised in that** the sternum plate is shaped to follow the shape of the horse's rib cage as the circumference enlarges moving backwards; anc **in that** the girth plate (41) is formed of polypropylene having a thickness of from 3mm to 8mm.

2. A girth as claimed in claim 1 wherein the girth plate does not deflect or deform when a force of about 20Nm is applied to the girth straps perpendicular to a surface of the girth plate (41).

3. A girth as claimed in claim 1 or claim 2 wherein the sternum plate (40) further comprises a sternum pad (42), wherein the sternum pad is positioned proximal to the horse, in use.

4. A girth as claimed in any preceding claim wherein the girth plate (41) is formed of a carbon fibre-reinforced polypropylene.

5. A girth as claimed in claim 4 wherein the girth plate (41) has a thickness of from 4mm to 6mm or about 5mm.

6. A girth as claimed in any preceding claim wherein the girth plate includes stiffening ribs.

7. A girth as claimed in any preceding claim wherein the sternum plate (40) further comprises a proximal layer of foam padding, optionally a layer of foam padding having a thickness of from 5mm to 18mm, 8mm to 14mm, 9mm to 12mm or about 10mm and optionally formed of a closed-cell foam.

8. A girth as claimed in any preceding claim wherein the sternum plate includes an upper cover (51) and a lower cover (54), optionally wherein the upper and/or lower covers are formed of leather.

9. A girth as claimed in claim 8 wherein at least one of the upper and/or lower covers includes perforations to permit air flow between the inside and outside of the sternum plate.

10. A girth as claimed in any preceding claim wherein an upper surface of the sternum plate includes guides or keepers (43) to position the girth straps to prevent longitudinal movement with respect to the sternum plate.

11. A girth as claimed in claim 3 or any one of claims 4 to 10 when dependent upon claim 3, wherein the sternum pad (42) is formed of a foamed polymeric material, optionally a closed-cell foam.

12. A girth as claimed in claim 11 wherein the foam has a net density of 80-150 kg/m³, or 100-120 kg/m³.

13. A girth as claimed in claim 11 or claim 12 wherein the foam has a thickness of from 15mm to 40mm, 20mm to 30mm, or about 25mm.

14. A girth as claimed in claim 3 or any one of claims 4 to 13 when dependent upon claim 3 wherein the sternum pad (42) further comprises an upper cover (55) and a lower cover (57), optionally wherein the upper and/or lower covers are formed of leather.

15. A girth as claimed in claim 14 wherein at least one of the upper and/or lower covers includes perforations to permit air flow between the inside and outside of the sternum pad.

## Patentansprüche

1. Gurt für ein Pferd, wobei der Gurt Gurtbänder (64) und eine Sternumplatte (40) umfasst, die die Gurtbänder (64) so beabstandet und überbrückt, dass die Gurtbänder im Gebrauch am Pferd durch die Sternumplatte im Bereich des aufsteigenden Brustmuskels (21) und des geraden Bauchmuskels (31) des Pferdes im Wesentlichen daran gehindert werden, mit dem Pferd in Berührung zu kommen; wobei die Sternumplatte (40) eine Gurtplatte (41) umfasst, die aus einem Material besteht, das sich unter Druck, der durch die Gurtbänder beim Festziehen im Gebrauch am Pferd ausgeübt wird, nicht wesentlich verbiegt oder verformt; **dadurch gekennzeichnet, dass** die Sternumplatte so geformt ist, dass sie der Form des Brustkorbs des Pferdes folgt, wenn sich der Umfang nach hinten vergrößert; und dadurch, dass die Gurtplatte (41) aus Polypropylen mit einer Dicke von 3 mm bis 8 mm gebildet ist.

2. Gurt nach Anspruch 1, **dadurch gekennzeichnet, dass** die Gurtplatte nicht auslenkt oder verformt wird, wenn eine Kraft von etwa 20 Nm auf die Gurtbänder senkrecht zu einer Oberfläche der Gurtplatte (41) ausgeübt wird.

3. Gurt nach Anspruch 1 oder 2, wobei die Sternumplatte (40) ferner ein Sternumpolster (42) umfasst, wobei das Sternumpolster im Gebrauch proximal zum Pferd positioniert ist.

4. Gurt nach einem der vorhergehenden Ansprüche, **dadurch gekennzeichnet, dass** die Gurtplatte (41) aus einem mit Kohlenstofffasern verstärkten Polypropylen besteht.

5. Gurt nach Anspruch 4, wobei die Gurtplatte (41) eine Dicke von 4 mm bis 6 mm oder etwa 5 mm aufweist.

6. Gurt nach einem der vorhergehenden Ansprüche, wobei die Gurtplatte Versteifungsrippen enthält.

7. Gurt nach einem der vorhergehenden Ansprüche, wobei die Sternumplatte (40) ferner eine proximale Schicht Schaumstoffpolsterung umfasst, gegebenenfalls eine Schicht Schaumstoffpolsterung mit einer Dicke von 5 mm bis 18 mm, 8 mm bis 14 mm, 9 mm bis 12 mm oder etwa 10 mm umfasst und gegebenenfalls aus einem geschlossenzelligen Schaum gebildet ist.

8. Gurt nach einem der vorhergehenden Ansprüche, wobei die Sternumplatte eine obere Abdeckung (51) und eine untere Abdeckung (54) umfasst, wobei die obere und/oder die untere Abdeckung gegebenenfalls aus Leder gebildet sind.

9. Gurt nach Anspruch 8, **dadurch gekennzeichnet, dass** mindestens eine der oberen und/oder der unteren Abdeckung Perforationen umfasst, um einen Luftstrom zwischen der Innenseite und der Außenseite der Sternumplatte zu ermöglichen.

10. Gurt nach einem der vorhergehenden Ansprüche, wobei eine obere Oberfläche der Sternumplatte Führungen oder Halterungen (43) enthält, um die Gurtbänder so zu positionieren, dass eine Längsbewegung in Bezug auf die Sternumplatte verhindert wird.

11. Gurt nach Anspruch 3 oder einem der Ansprüche 4 bis 10 in Abhängigkeit von Anspruch 3, wobei das Sternumpolster (42) aus einem geschäumten Polymermaterial, gegebenenfalls einem geschlossenzelligen Schaum, gebildet ist.

12. Gurt nach Anspruch 11, **dadurch gekennzeichnet, dass** der Schaum eine Nettodichte von 80 bis 150 kg/m³ oder 100 bis 120 kg/m³ aufweist.

13. Gurt nach Anspruch 11 oder Anspruch 12, wobei der Schaum eine Dicke von 15 mm bis 40 mm, 20 mm bis 30 mm oder etwa 25 mm aufweist.

14. Gurt nach Anspruch 3 oder einem der Ansprüche 4 bis 13 in Abhängigkeit von Anspruch 3, wobei das Sternumpolster (42) ferner eine obere Abdeckung (55) und eine untere Abdeckung (57) umfasst, wobei die obere und/oder die untere Abdeckung gegebenenfalls aus Leder gebildet sind.

15. Gurt nach Anspruch 14, **dadurch gekennzeichnet, dass** mindestens eine der oberen und/oder der unteren Abdeckung Perforationen umfasst, um einen Luftstrom zwischen der Innenseite und der Außenseite des Sternumpolsters zu ermöglichen.

## Revendications

1. Sangle pour un cheval, la sangle comprenant des bandes de sangle (64) et une plaque sternale (40) espaçant et reliant les bandes de sangle (64) de telle sorte que, à l'usage sur un cheval, la plaque sternale empêche sensiblement les bandes de sangle de toucher le cheval dans la région du muscle pectoral ascendant (21) et du muscle droit de l'abdomen (31) du cheval, la plaque sternale (40) comprenant une plaque de sangle (41) constituée d'un matériau qui ne pliera ou ne se déformera sensiblement pas sous des pressions exercées par les bandes de sangle lorsqu'elles seront serrées, à l'usage, sur un cheval ; **caractérisée en ce que**
la plaque sternale est formée de manière à épouser la forme de la cage thoracique du cheval lorsque la circonférence s'élargit en allant vers l'arrière ; et **en ce que** la plaque de sangle (41) est constituée de polypropylène ayant une épaisseur allant de 3 mm à 8 mm.

2. Sangle selon la revendication 1 dans laquelle la plaque de sangle ne fléchit pas ou ne se déforme pas lorsqu'une force d'environ 20 Nm est appliquée aux bandes de sangle perpendiculairement à une surface de la plaque de sangle (41).

3. Sangle selon la revendication 1 ou la revendication 2 dans laquelle la plaque sternale (40) comprend en outre un coussin sternal (42), le coussin sternal étant positionné à l'usage à proximité du cheval.

4. Sangle selon une quelconque revendication précédente dans laquelle la plaque de sangle (41) est constituée d'un polypropylène renforcé de fibres de carbone.

5. Sangle selon la revendication 4 dans laquelle la plaque de sangle (41) a une épaisseur allant de 4 mm à 6 mm ou d'environ 5 mm.

6. Sangle selon une quelconque revendication précédente dans laquelle la plaque de sangle comporte des nervures de raidissement.

7. Sangle selon une quelconque revendication précédente dans laquelle la plaque sternale (40) comprend en outre une couche proximale de rembourrage en mousse, éventuellement une couche de rembourrage en mousse ayant une épaisseur allant de 5 mm à 18 mm, 8 mm à 14 mm, 9 mm à 12 mm, ou d'environ 10 mm, et éventuellement constituée d'une mousse à cellules fermées.

8. Sangle selon une quelconque revendication précédente dans laquelle la plaque sternale comporte une protection supérieure (51) et une protection inférieure (54), les protections supérieure et/ou inférieure étant éventuellement constituées de cuir.

9. Sangle selon la revendication 8 dans laquelle au moins une des protections supérieure et/ou inférieure comporte des perforations pour permettre un écoulement d'air entre l'intérieur et l'extérieur de la plaque sternale.

10. Sangle selon une quelconque revendication précédente dans laquelle une surface supérieure de la plaque sternale comporte des guides ou des éléments de retenue (43) pour positionner les bandes de sangle afin d'empêcher un mouvement longitudinal par rapport à la plaque sternale.

11. Sangle selon la revendication 3 ou l'une quelconque des revendications 4 à 10 lorsqu'elles sont dépendantes de la revendication 3, dans laquelle le coussin sternal (42) est constitué d'un matériau polymère expansé, éventuellement d'une mousse à cellules fermées.

12. Sangle selon la revendication 11 dans laquelle la mousse a une masse volumique nette de 80-150 kg/m³, ou 100-120 kg/m³.

13. Sangle selon la revendication 11 ou la revendication 12 dans laquelle la mousse a une épaisseur allant de 15 mm à 40 mm, 20 mm à 30 mm, ou d'environ 25 mm.

14. Sangle selon la revendication 3 ou l'une quelconque des revendications 4 à 13 lorsqu'elles sont dépendantes de la revendication 3 dans laquelle le coussin sternal (42) comprend en outre une protection supérieure (55) et une protection inférieure (57), éventuellement dans laquelle les protections supérieure et/ou inférieure sont constituées de cuir.

15. Sangle selon la revendication 14 dans laquelle au moins une des protections supérieure et/ou inférieure comporte des perforations pour permettre un écoulement d'air entre l'intérieur et l'extérieur du coussin sternal.
